# EUROPEAN PATENT APPLICATION

(11) **EP 3 205 392 A1**
(43) Date of publication of application: **16.08.2017**
(21) Application number: 16155470.4
(22) Date of filing: 12.02.2016
(51) Int. Cl.: B01J 13/14, A01N 25/28

(54) **MICROCAPSULES AND PROCESS FOR PREPARATION OF MICROCAPSULES**

(71) Applicant: BASF SE, 67056 Ludwigshafen am Rhein (DE)
(72) Inventor: The designation of the inventor has not yet been filed
(74) Representative: BASF IP Association

(57) **Abstract**

The present invention relates to microcapsules comprising at least one polyether vinyl ester graft polymer, at least one acrylic polymer, and water in the range of from 0.1 % of weight to 100 % of weight of the total polymer as well as to processes preparing the same.

## Description

The present invention relates to microcapsules comprising at least one polyether vinyl ester graft polymer, at least one acrylic polymer, and water in the range of from 0.1 % of weight to 100 % of weight of the total polymer as well as to processes preparing the same.

Two main emulsion based reactive microencapsulation technologies are known: oil-in-water and water-in-oil microencapsulation. The first one (oil-in-water microencapsulation) is commonly used to encapsulate non-polar active ingredients. The second one (water-in-oil microencapsulation) is employed for the encapsulation of polar (i.e. water soluble) actives. For water-in-oil microencapsulation water soluble actives are emulsified in a hydrophobic phase (e.g. in an oil) in the presence of wall building components (e.g. monomers or reactive polymers). When applying water-in-oil encapsulation techniques to enzymes, the enzymes must be able to exist in the presence of the hydrophobic phase of an organic/aqueous biphasic system without denaturation, which is not easily achieved. By reaction of the building components microcapsules containing the active ingredient dispersed in the hydrophobic phase are obtained. However, for some microcapsules containing product formulations, hydrophobic solvents such as for example mineral oils (paraffinic, naphthenic and aromatic), n-hexane, and cyclohexane are a serious disadvantage because of toxicological, regulatory, or environmental reasons.

In addition to water-in-oil and oil-in-water systems water-in-water (aqueous biphasic) systems are known. Water-in-water systems can be obtained by inducing phase separation in an aqueous system containing a water-soluble polymer by for example addition of a salt, resulting in an aqueous phase containing the water-soluble polymer and another aqueous phase containing the dissolved salt. These water-in-water emulsion systems are mainly used for isolation and purification of enzymes.

Aqueous biphasic systems containing polyvinyl alcohol and dextran are known for stabilization and encapsulation of proteins during spray drying (ELVERSSON, J., MILLQVIST-FUREBY, A. Journal of Pharmaceutics 2005, volume 294(1-2), pages 73-87).

Salting-out effects of electrolytes on polymers in aqueous biphasic systems are described for a series of eight electrolytes and polyethylene glycol (HEY, M., JACKSON, D., DANIEL, P., YAN, H. Polymer 2005, volume 46(8), pages 2567-2572).

JP48043421 teaches the microencapsulation of water-soluble inorganic compounds such as ammonium sulfate, sodium chloride or sodium carbonate with organic hydroxyl compounds such as polyvinyl alcohol in organic solvents such as toluene.

JP50148584 teaches the microencapsulation of enzyme preparations in water-in-oil systems containing sugars, salts, process additives such as ethyl cellulose and monomers such as styrene. Enzyme microcapsules are obtained after polymerization and evaporation of the solvents. CN102532375 describes the preparation of polyacrylamide microspheres by water-in-water polymerization in an inorganic saline solution, with linear polymers as stabilizer and acrylamide as base monomer.

There is a need for encapsulated polymers such as polyether vinyl ester graft polymer or mixtures of polyether vinyl ester graft polymer with active ingredients in microcapsules for e.g. stabilization of said polymer or active ingredient. An example for an active ingredient is an enzyme. There is also a need for controlled delivery of active ingredients by microencapsulation of said active ingredients. Additionally there is a need for controlled release of said active ingredients by controlled decomposition of the microcapsule material or by controlled diffusion of the active ingredient out of the microcapsule matrix.

There is also a need for an encapsulation technique which can be applied to a wide range of active ingredients without the disadvantages of a hydrophobic (oil) component in the final system.

It was the object of the present invention to comply with such needs.

The technical solution is provided by the present invention as described herein below and defined in the claims.

The present invention relates to microcapsule comprising
(a) at least one polyether vinyl ester graft polymer,
(b) at least one acrylic polymer, and
(c) water in the range of from 0.1 % of weight to 100 % of weight of the total polymer.

The microcapsules according to the present invention comprising at least one polyether vinyl ester graft polymer may be applied for any typical fabric and home care application which currently uses at least one polyether vinyl ester graft polymer. As has beend found in accordance with the present invention, encapsulation of at least one polyether vinyl ester graft polymer the polymer is released in a controlled manner compared to non-encapsulated polyether vinyl ester graft polymer in the same application, therefore prolonging availability of the polymer.

The microcapsules according to the present invention comprise at least one polyether vinyl ester graft polymer and at least one acrylic polymer and water in the range of from 0.1 % of weight to 100 % of weight of the total polymer. These microcapsules can additionally comprise active ingredients such as enzymes for controlled delivery and release. Therefore in one embodiment these microcapsules applied in an aqueous dispersion are insoluble in water in pH range of from 1 to 12 in a time interval of 1 hour.

As has surprisingly been found in context with the present invention, encapsulation of active ingredients using emulsion-based reactive microencapsulation technology the application range of these active ingredients can be expanded. Encapsulation of enzymes provides enhanced stability of the enzymes in formulations and prevents enzymes to interact with other ingredients of the formulation before the actual application. Encapsulation of fungicides or insecticides as disclosed in accordance with the present invention provides improved shelf life of formulations containing these encapsulated active ingredients as well as lower dosing rates because of slower decomposition of the active ingredients.

The water content of the microcapsules may be of from 0.1 % to 100 %by weight of the total polymer, from 1 % to 75 % by weight, from 5 % to 50 % by weight and of from 10 % to 25 %by weight of the total polymer.

The water content of the microcapsules may be determined as follows: The microcapsules of the aqueous dispersion may be separated from the water by filtration and dried at 40°C under atmospheric pressure for 12 hours. The sample may be transferred into a Metrohm 860KF Thermoprep unit linked to a Coulometer 831 KF. The sample may then be heated to 140°C, the resulting water vapor is removed by a constant stream of nitrogen gas and transferred into the titration unit. The water content may be determined by Karl-Fischer titration as known in the art.

Average particle size of the microcapsules may be less than 250 µm, less than 100 µm, less than 50 µm, less than 35 µm or less than 10 µm.

The average particle size may be determined by the following method:
Measurement of average particle size by using light microscopy may be carried out as follows: The microcapsules size (arithmetic mean, sum of all sizes divided by the number of particles) may be determined by optical microscopy (Leica DM 5000 B) and diameter measurements from 3 batches (in each batch 100 capsules may be measured). Diameter measurements may be conducted with known software for scientific image analysis (Leica Application Suite V3.8). D50 means that 50% of the particles have a particle size less than/equal to this value.

A microcapsule according to the invention comprises any particle which is at least composed of the polymer of component a consisting of at least one polyether vinyl ester graft polymer, and at least one acrylic polymer formed out of at least one acrylic monomer (a3) during polymerization.

The polymer of component a) is at least one polyether vinyl ester graft polymer. The preferred suitable compounds for preparing polyether vinyl ester can graft copolymers comprise vinyl esters of linear and branched C1 -C30 carboxylic acids, for example C1 -C12 carboxylic acids, and their derivatives. Suitable vinyl esters comprise vinyl formate, vinyl acetate, vinyl propionate, vinyl butyrate, vinyl chloroacetate, vinyl dichloroacetate, vinyl bromoacetate, vinyl trifluoroacetate, vinyl benzoate, and mixtures of these. The vinyl ester component may inter alia comprise vinyl acetate or is composed thereof.

Other comonomers may be used to prepare the polyether vinyl ester graft copolymers. The proportion of comonomers may be from 0 to 50% by weight, 0.01 to 30% by weight, or 1 to 10% by weight, based on the total weight of monomers used for the polymerization process.

Suitable comonomers comprise N-vinyllactams and N-vinyllactam derivatives, N-vinylamides of saturated monocarboxylic acids, primary amides of α,β-ethylenically unsaturated monocarboxylic acids, and their N-alkyl and N,N-dialkyl derivatives, esters of α,β-ethylenically unsaturated mono- and dicarboxylic acids with diols, amides of α,β-ethylenically unsaturated mono- and dicarboxylic acids with diamines which have at least one primary or secondary amino group, esters and amides of α,β-ethylenically unsaturated mono- and dicarboxylic acids with amino alcohols, esters of α,β-ethylenically unsaturated mono- and dicarboxylic acids with alkanols, esters of allyl alcohol with monocarboxylic acids, vinylaromatic compounds, vinyl halides, vinylidene halides, monoolefins, non-aromatic hydrocarbons having at least two conjugated double bonds, vinyl- and allyl-substituted nitrogen heterocycles, N,N-diallylamines, and N,N-diallyl-N-alkylamines, and their acid- adduct salts and quaternization products. Other suitable comonomers comprise any desired mixtures of the abovementioned monomers.

Suitable comonomers further comprise N-vinyllactams and N-vinyllactam derivatives which, by way of example, may have one or more C1 -C6 alkyl substituents, such as methyl, ethyl, n-propyl, isopropyl, n-butyl, sec-butyl, tert-butyl, etc. Among these are, for example, N-vinylpyrrolidone, N-vinylpiperidone, N-vinylcaprolactam, N-vinyl-1-5-methyl-2- pyrrolidone, N-vinyl-5-ethyl-2-pyrrolidone, N-vinyl-6-methyl-2-piperidone, N-vinyl-6-ethyl-2-piperidone, N-vinyl-7-methyl-2-caprolactam, N-vinyl-7-ethyl-2-caprolactam, etc. It is preferable to use N-vinylpyrrolidone, and N-vinylcaprolactam.

Other suitable comonomers comprise N-vinylformamide, N-vinyl-N-methylformamide, N-vinylacetamide, N-vinyl- N-methylacetamide, N-vinyl-N-ethylacetamide, N-vinylpropionamide, N-viny 1-N-methylpropionamide, N-vinylbutyramide, acrylamide, methacrylamide, N-methyl(meth)acrylamide, N-ethyl(meth)acrylamide, N-propyl(meth)acrylamide, N-(n-butyl)(meth)acrylamide,
N-(tert-butyl)(meth)acrylamide, N,N-dimethyl(meth)acrylamide, N,N-diethyl(meth)acrylamide, piperidinyl(meth)acrylamide, morpholinyl(meth)acrylamide, N-[2-( dimethylamino )ethyl]acrylamide, N-[2-( dimethy lamino )ethy 1 ]methacry lamide, N-[3-( dimethylamino )propyl]acrylamide, N-[3-( dimethy lamino )propy 1 ]methacry lamide, N-[ 4-( dimethylamino )butyl]acrylamide, N-[ 4-( dimethylamino )butyl]methacrylamide, N-[2-( diethylamino )ethyl]acrylamide, N-[ 4-( dimethyla-mino )cyclohexyl ]acrylamide, N-[ 4-( dimethylamino )cyclohexyl]methacrylamide, N-(noc-tyl)(meth)acrylamide, N-(1,1,3,3-tetramethy Ibuty l)(meth )acry lamide, N-ethylhexyl(meth)acrylamide, N-(n-nonyl)(meth)acrylamide, N-(n-decyl)(meth)acrylamide, N-(n-undecyl)(meth)acrylamide, N-tridecyl(meth)acrylamide, N-myristyl(meth)acrylamide, N-pentadecyl(meth)acrylamide, N-palmityl(meth)acrylamide, N-heptadecyl(meth)acrylamide, N-non-adecyl(meth)acrylamide, N-arraquinyl(meth)acrylamide, N-behenyl(meth)acrylamide, N-lignocereny, 1 ( meth )acrylamide, N-cerotiny l(meth )acrylamide, N-melissinyl(meth)acrylamide, N-palmitoleinyl(meth)acrylamide, N-oleyl(meth)acrylamide, N-linolyl(meth)acrylamide, N-lino-lenyl(meth)acrylamide, N-stearyl(meth)acrylamide, and N-lauryl(meth)acrylamide.

Other suitable comonomers comprise esters of α,β-ethylenically unsaturated mono- and dicarboxylic acids with diols. Examples of suitable acid components of these esters are acrylic acid, methacrylic acid, fumaric acid, maleic acid, itaconic acid, crotonic acid, maleic anhydride, monobutyl maleate, and mixtures of these. Preferred acid components comprise acrylic acid, methacrylic acid and mixtures of these. Suitable compounds comprise 2-hydroxyethyl acrylate, 2-hydroxyethyl methacrylate, 2-hydroxyethyl ethacrylate, 2-hydroxypropyl acrylate, 2-hydroxypropyl methacrylate, 3-hydroxypropyl acrylate, 3-hydroxypropyl methacrylate, 3-hydroxybutyl acrylate, 3-hydroxybutyl methacrylate, 4-hydroxybutyl acrylate, 4-hydroxybutyl methacrylate, 6-hydroxy-hexyl acrylate, 6-hydroxyhexyl methacrylate, 3-hydroxy-2-ethylhexyl acrylate, and 3-hydroxy-2-ethylhexyl methacrylate.

The polyether component used for grafting preferably comprises at least one polyalkylene glycol. Preferred polyalkylene glycols comprise polyethylene glycols, polypropylene glycols, polytetrahydrofurans, and block copolymers composed of alkylene oxides, particularly preferably block copolymers composed of ethylene oxide, and propylene oxide, or block copolymers composed of ethylene oxide, propylene oxide, and butylene oxide. These block copolymers may comprise the copolymerized alkylene oxide units in random distribution or in the form of blocks. Suitable polytetrahydrofurans can be prepared via cationic polymerization of tetrahydrofuran in the presence of acidic catalyst, e.g. sulfuric acid or fluorosulfuric acid. These preparation processes are known to the person skilled in the art.

For grafting it may be advantageous to use homo- and copolymers of ethylene oxide. The ethylene oxide content of the copolymers may be in the range of from 40 to 99% by weight.

Alongside straight-chain polyalkylene glycols, branched polyalkylene glycols may also be used as graft base. Branched polyalkylene glycols may be prepared by an addition reaction of alkylene oxides onto polyalcohol residues, e.g. onto pentaerythritol, glycerol, or sugar alcohols, such as D-sorbitol and D-mannitol, or else onto polysaccharides, such as cellulose and starch.

In one embodiment the preferred polyether vinyl ester graft copolymer is polyethylene glycol vinyl acetate.

The acrylic polymer is prepared by polymerization of at least one monomer (a3). Monomer (a3) may be selected from the group consisting of C₁ to C₂₄-alkyl esters of acrylic acid, C₁ to C₂₄-glycidyl esters of acrylic acid, C₁ to C₂₄-alkyl esters of methacrylic acid, C₁ to C₂₄-glycidyl esters of methacrylic acid, acrylic acid esters with hydroxylic groups, acrylic acid esters with carboxylic groups, methacrylic acid esters with hydroxylic groups, methacrylic acid esters with carboxylic groups, and acrylates having two or more acrylic groups in the molecule.

In one embodiment of the present invention, the C₁ to C₂₄-alkyl esters of acrylic or methacrylic acid may be selected from the group consisting of methyl, ethyl, n-propyl and n-butyl acrylate.

In one embodiment of the present invention, glycidyl methacrylate is selected.

In another embodiment of the present invention acrylates having two or more acrylic groups in the molecule such as esters with hydroxylic groups of acrylic and methacrylic acid may be selected from the group consisting of 2-hydroxyethylacrylate, 2-hydroxyethylmethacrylate,hydroxy-butylacrylate, hydroxybutylmethacrylate, diethylene glycol monoacrylate, and diethylene glycol monomethacrylate. Other examples comprise ethylene glycol diacrylate, ethylene glycol dimethacrylate, 1,3-butylene glycol dimethacrylate, diethylene glycol diacrylate, dipropylene glycol diacrylate, methallylmethacrylamide, allyl acrylate and allyl methacrylate. Particular preference is given to propanediol diacrylate, butanediol diacrylate, pentanediol diacrylate and hexanediol diacrylate and the corresponding methacrylates.

In another embodiment of the present invention, additional monomers with two or more ethylenically unsaturated double bonds in the molecule which are not acrylates may also be added to act as crosslinkers. Examples for monomers with two ethylenically unsaturated double bonds in the molecule comprise divinylbenzene and divinylcyclohexane, and preferably the diallyl and divinyl ethers of diols.

In one embodiment the microcapsule may comprise a core-shell capsule, with the core comprising polymer component A and the shell at least partially comprising the polymer formed out of at least one monomer (a3) during polymerization. Depending on the thickness of the capsule shell, the permeability of the capsules shell can be influenced to be impermeable or sparingly permeable for the capsule core material. In another embodiment the microcapsule has a continuous matrix structure with polymer component A and the polymer formed out of at least one monomer (a3) during polymerization distributed over the whole volume of the particle. The distribution of the at least two polymers is either homogenous or heterogeneous throughout the volume of the particle.

In one embodiment, the microcapsules according to the invention may comprise a capsule core and a capsule shell. The capsule core consists predominantly, to more than 95% by weight, of the core material, which may be an individual substance or a substance mixture.

In one embodiment of the present invention, the microcapsule may additionally contains an active ingredient. In the context of this invention, the term active ingredient is understood as a substance, which when applied in an application improves at least one of the results obtained during said application compared to when the substance would not be applied in said application. An example are enzymes.

Enzymes may be used with different concentrations of active enzyme protein in the total enzyme.

In one embodiment of the present invention, the microcapsule may comprise at least one enzyme. The ratio of the weight of total enzyme to the weight of polyether vinyl ester graft polymer in the microcapsule may lie in the range of from 10 : 1 to 1 : 10000, 9 : 1 to 1 : 500, 5 : 1 to 1 : 200, or 1.5 : 1 to 1 : 100.

In one embodiment, the amount of active enzyme protein based on polyether vinyl ester graft polymer may lie in the range of from 0.1 to 20 % of weight, 0.1 to 15 % of weight, 0.2 to 10 % of weight, or 1.0 to 5 % of weight.

Examples of suitable enzymes include, but are not limited to, hemicellulases, peroxidases, proteases, cellulases, xylanases, lipases, phospholipases, esterases, cutinases, pectinases, mannanases, pectate lyases, keratinases, reductases, oxidases, phenoloxidases, lipoxygenases, ligninases, pullulanases, tannases, pentosanases, malanases, β-glucanases, arabinosidases, hyaluronidases, chondroitinases, laccases, nucleases and amylases, or mixtures thereof.

In one embodiment preferred enzymes include a protease. Suitable proteases include metalloproteases and serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:
(a) subtilisins (EC 3.4.21.62), including those derived from Bacillus, such as Bacillus lentus, B. alkalophilus, B. subtilis, B. amyloliquefaciens, Bacillus pumilus and Bacillus gibsonii as described in U.S. Pat. No. 6,312,936 B1, U.S. Pat. No. 5,679,630, U.S. Pat. No. 4,760,025, U.S. Pat. No. 7,262,042 and WO09/021867. The main representatives are the subtilisins from Bacillus amyloliquefaciens (called BPN') and Bacillus licheniformis (called subtilisin Carlsberg), the serine protease PB92, subtilisin 147 and/or 309 (sold under the trade name Savinase® by Novozymes A/S, Bagsvaerd , Denmark) and subtilisin from Bacillus lentus, especially from Bacillus lentus (DSM 5483) and each of the variants available via mutagenesis of these enzymes Examples as described in WO 89/06276 and EP 0 283 075, WO 89/06279, WO 89/09830, WO 89/09819 and WO9106637. Proteases of the subtilisin type (subtilases, subtilopeptidases, EC 3.4.21.62, valid as of September 9, 2014) are classed as belonging to the serine proteases, due to the catalytically active amino acids. They are naturally produced and secreted by microorganisms, in particular by Bacillus species. They act as unspecific endopeptidases, i.e. they hydrolyze any acid amide bonds located inside peptides or proteins. Their pH optimum is usually within the distinctly alkaline range. A review of this family is provided, for example, in the paper "Subtilases: Subtilisin-like Proteases" by R. Siezen, pages 75-95 in "Subtilisin enzymes", edited by R. Bott and C. Betzel, New York, 1996. Subtilisins are suitable for a multiplicity of possible technical uses, in particular as active ingredients of detergents or cleaning agents. The class of serine proteases shares a common amino acid sequence defining a catalytic triad which distinguishes them from the chymotrypsin related class of serine proteases.
(b) trypsin-type or chymotrypsin-type proteases, such as trypsin (e.g., of porcine or bovine origin), including the Fusarium protease described in WO 89/06270 and the chymotrypsin proteases derived from Cellumonas as described in WO 05/052161 and WO 05/052146. The subtilisins and chymotrypsin related serine proteases both have a catalytic triad comprising aspartate, histidine and serine. In the subtilisin related proteases the relative order of these amino acids, reading from the amino to carboxy terminus is aspartatehistidine-serine. In the chymotrypsin related proteases the relative order, however is histidine-aspartateserine. Thus, subtilisin herein refers to a serine protease having the catalytic triad of subtilisin related proteases.
(c) metalloproteases, including those derived from Bacillus amyloliquefaciens described in WO 07/044993A2., neutral protease NprE (EC:3.4.24.28) described in US 20110104786 A1 and proteinase T (Thermolysin) described in EP 2205732 A2 (Danisco US Inc., now DuPont Nutrition & Health)

Suitable commercially available protease enzymes include those sold under the trade names ALCALASE®, SAVINASE®, PRIMASE®, DURAZYM®, POLARZYME®, KANNASE®, LIQUA-NASE®, LIQUANASE ULTRA®, SAVINASE ULTRA®, OVOZYME®, NEUTRASE®, EVER-LASE® and ESPERASE® by Novozymes A/S (Denmark), those sold under the tradename MAXATASE®, MAXACALI®, MAXAPEM®, PROPERASE®, PURAFECT® (EFFECTENZ™ P), PURAFECT PRIME® (PREFERENZ™ P), PURAFECT OX®, FN3®, FN4®, EXCELLASE® (EXCELLENCE™ P) andPURAFECT OXP®by Genencor International, those sold under the tradename OPTICLEAN® and OPTIMASE® by Solvay Enzymes.

Suitable alpha-amylases include those of bacterial or fungal origin. Chemically or genetically modified mutants (variants) are included. A preferred alkaline alpha-amylase is derived from a strain of Bacillus, such as Bacillus licheniformis, Bacillus amyloliquefaciens, Bacillus stearothermophilus, Bacillus subtilis, or other Bacillus sp., such as Bacillus sp. NCIB 12289, NCIB 12512, NCIB 12513, DSM 9375 (U.S. Pat. No. 7,153,818) DSM 12368, DSMZ no. 12649, KSM AP1378 (WO 97/00324), KSM K36 or KSM K38 (EP 1,022,334).

Suitable commercially available alpha-amylases include DURAMYL®, LIQUEZYME®, TERMAMYL®, TERMAMYL ULTRA®, NATALASE®, SUPRAMYL®, STAINZYME®, STAINZYME PLUS®, FUNGAMYL®, AMPLIFY®and BAN® (Novozymes A/S, Bagsvaerd, Denmark), KEMZYM® AT 9000 Biozym Biotech Trading GmbH Wehlistrasse 27b A-1200 Wien Austria, RAPIDASE®, PURASTAR® (EFFECTENZ™ S), ENZYSIZE®, OPTISIZE HT PLUS®, POWERASE® and PURASTAR OXAM® (Genencor International Inc., Palo Alto, Calif., now part of Du Pont Nutrition & Health) and KAM® (Kao, 14-10 Nihonbashi Kayabacho, 1-chome, Chuo-ku Tokyo 103-8210, Japan). In one aspect, suitable amylases include NATALASE®, STAINZYME® and STAINZYME PLUS® and mixtures thereof.

In one embodiment of the invention, such enzymes may be selected from the group consisting of: lipases, including "first cycle lipases" such as those described in U.S. Pat. No. 6,939,702 B1 and US PA 2009/0217464. In one aspect, the lipase is a first-wash lipase, preferably a variant of the wild-type lipase from Thermomyces lanuginosus comprising one or more of the T231R and N233R mutations. The wild-type sequence is the 269 amino acids (amino acids 23-291) of the Swissprot accession number Swiss-Prot 059952 (derived from Thermomyces lanuginosus (Humicola lanuginosa)). Preferred lipases would include those sold under the tradenames LI-PEX® and LIPOLEX®.

In one aspect, other preferred enzymes include microbial-derived endoglucanases exhibiting endo-beta-1,4-glucanase activity (E.C. 3.2.1.4), including a bacterial polypeptide endogenous to a member of the genus Bacillus which has a sequence of at least 90%, 94%, 97% and even 99% identity to the amino acid sequence SEQ ID NO:2 in U.S. Pat. No. 7,141,403B2) and mixtures thereof. Suitable endoglucanases are sold under the tradenames CELLUCLEAN® and WHITEZYME® (Novozymes A/S, Bagsvaerd, Denmark).

Other preferred enzymes include pectate lyases sold under the tradenames PECTAWASH®, PECTAWAY®, XPECT® and mannanases sold under the tradenames MANNAWAY® (all from Novozymes A/S, Bagsvaerd, Denmark), and PURABRITE®, MANNASTAR® (Genencor International Inc., Palo Alto, Calif.).

Exemplary enzymes may be selected from the group consisting of oxireductases, transferases, hydrolases, lyases, isomerases and lipases.

A further embodiment is directed to aqueous dispersions of water-containing microcapsules.

Another embodiment is an aqueous dispersion of microcapsules of the present invention comprising at least one enzyme selected from the group consisting of oxireductases, transferases, hydrolases, lyases, isomerases and lipases.

The aqueous dispersion may comprise microcapsules with a core-shell structure. The shell may be formed by an acrylic polymer. The resulting polymer forming the shell may be, e.g., a polymer which is insoluble in water in the pH range of from 1 to 12 in a time interval of one hour. The insolubility of the polymer may be determined by size-exclusion chromatography (SEC) using SUPREMA combination ultrahigh (PSS) chromatographic columns. The polymer analysis may be performed in aqueous buffer eluent. The calibration may be obtained with narrow molar mass standards (Pullulan, molar mass range 342-2560000 g/mol, PSS).

The microcapsules and aqueous dispersions according the present invention may be used for typical fabric and home care applications.

The present invention also relates to a process for preparing microcapsules, e.g., those as described herein above or below.

In one embodiment of the present invention, microcapsules (e.g., those according to the present invention as described above or below) are obtained or obtainable by carrying out the process for the preparation of microcapsules as described and provided in context with the present invention.

That is, the present invention also relates to a process for the preparation of microcapsules (e.g., those as described herein above or below), comprising the following steps:
(a) preparation of an aqueous biphasic system by mixing
   (i) component (a1) comprising a component A consisting of at least one polyethether vinyl ester graft polymer;
      wherein component (a1) is a monophasic system at 23°C, and forms a monophasic system at 23°C if mixed with water in the range of from 1:99 to 99:1 by weight, and
   (ii) component (a2) containing water and a water-soluble salt B, wherein (a2) is a monophasic system at 23°C, and
   (iii) at least one monomer (a3), and
   (iv) optionally at least one initiator (a4),
   wherein (a1), (a2), (a3), and (a4) can be mixed together in any order or simultaneously, followed by
(b) optionally shearing of the biphasic system to form an emulsion, and
(c) polymerization of monomer (a3).

The present invention also relates to microcapsules obtained or obtainable by the process as described and provided herein.

Microcapsules obtained or obtainable by the process of this invention are practicable free of hydrophobic solvents like for examples oils. The absence of hydrophobic solvents makes the utilization of the encapsulated active ingredients in applications which have been currently not accessible because of toxicological, regulatory or environmental restrictions possible. A large variety of active ingredients not compatible with hydrophobic solvents currently used for encapsulation become available for encapsulation with the process of this invention. Additionally, substances which currently cannot be encapsulated because of their sensitivity towards a solvent or the reaction conditions can be encapsulated using the process according to the present invention because of the mild reaction conditions applied and the limitation to water as the only solvent in the process.

The term aqueous biphasic system according to this invention describes a system in which two separate aqueous phases can be observed in one system. The aqueous biphasic system forms during or after mixing of the two components (a1) and (a2). A stable emulsion forms either spontaneously during mixing of the separate phases or by applying shear force. The shear rate for the preparation of the emulsion lies in the range of from 150 to 20000 rpm, the stirring time for the preparation of the emulsion lies in the range of from 1 min to 180 min and an anchortype stir-ring blade, a MIG-stirrer or high shear stirrer is used for the preparation of the emulsion. An emulsion is rated stable according to the present invention when after generation of the emulsion no phase separation is observed at a storage temperature of 23°C within 6 h.

Mixing of components (a1) to (a4) is carried out in any order or simultaneously. Any one component can be poured, sprayed, and/or blended with any one other component or with an already existing mixture of components. Mixing can be achieved by stirring, spraying, shaking or any physical mean in the vessels used for mixing which cause turbulences during the mixing process.

Component (a1) is characterized in that it is monophasic at 23°C. To determine if component (a1) is monophasic, component A may be dissolved in water, stored at 23°C for 6 h followed by measurement of the turbidity index of the solution. The turbidity index may be measured as described in ISO 7027:1999 (Water quality - determination of turbidity), and the resulting turbidity is expressed in Formazin Nephelometric Units (FNU). If the turbidity of the solution may be equal or less than 20 FNU, the solution is considered monophasic. Additionally, component (a1) can be diluted with water in a weight ratio from 1 part component (a1) to 99 parts water to 99 parts component (a1) to 1 part water while remaining monophasic. Dilution of component (a1) with water may be carried out on lab scale with the total volume of component (a1) and water used for dilution not exceeding 500 ml for practical purposes. Component (a1) and water may both be tempered to 23°C. The sample of component (a1) may be placed in a suitable beaker and stirred on a lab stirrer with a magnetic bar at 50 to 100 rpm. The amount of water to be added for the test may be added within 5 to 20 s to component (a1) and the resulting diluted solution may be stirred for 30 min. After stirring, the solution may be stored for 6 h at 23°C, followed by measurement of the turbidity index of the solution as described above. If the turbidity of the solution is equal or less than 20 FNU, the solution is considered monophasic. To determine suitable polymers and their applicable concentration range in component (a1) a polymer can be dissolved in water at 23°C at different concentrations, the solutions being stored at 23°C for 6 h followed by measurement of the turbidity index of each solution. The turbidity index is measured as described above. If the turbidity of the solution is equal or less than 20 FNU, the solution is considered monophasic. All solutions with a polymer concentration lower than the highest concentration measured according to the method described above with a turbidity equal or less than 20 FNU can be used as component (a1) according to the present invention.

Turbidity may be measured in Formazin Nephelometric Units as follows: Turbidity may be measured using Trübungsphotometer LTP 4 from Hach as described in ISO 7027:1999. Formazin primary standards with particle size range 0.01 to 10.0 µm may be used for the calibration. The standard were prepared using clean Class A glassware and may be diluted with RO/DI water. Each measured sample may be thoroughly mixed immediately prior to measurement.

Solids content of component A may be determined with an Ohaus Halogen Moisture Analyzer. The instrument operates on thermogravimetric principle by measuring the weight of the sample while heating it at 140°C until equilibrium weight is obtained. Solids content may be calculated by dividing the sample weight prior drying by the equilibrium sample weight after drying and expressed in percent of weight. Solids content of component A in component (a1) may be in the range of from 0.1 to 70 %, 1% to 60%, 5% to 50% or 10% to 40% by weight.

Component (a2) is characterized in that it is monophasic at 23°C. Whether component (a2) is monophasic or not may be determined as described for component (1). Component (a2) contains water and a water-soluble salt B. Salt B is attributed the property "water-soluble" according to this description when a sample of 10 g of salt B dissolves completely in 100 g water at 23°C within 6 h while being stirred on a magnetic stirrer with a magnetic stirrer bar at 50 to 100 rpm. The turbidity index may be measured as described in ISO 7027:1999 (Water quality - determination of turbidity), and the resulting turbidity may be expressed in Formazin Nephelometric Units (FNU). If the turbidity of the solution is equal or less than 20 FNU, the component B is considered water-soluble.

The water-soluble salt B may be selected from the formula K^{(a+)}_{b}N^{(b-)}ₐ, with the cation K selected from ammonium, potassium, sodium, magnesium, and calcium, and the anion N selected from sulfate, fluoride, chloride, bromide, iodide, phosphate, acetate, nitrate, and methanesulfonate, with a and b representing the absolute value of the charge of each ion as a natural number and the stoichiometric number for each ion in the salt. Cations may be selected from ammonium, potassium and sodium, e.g., ammonium. Anions may inter alia be selected from sulfate and chloride, e.g.,sulfate.

Solids content of component B in component (a2) may be determined with an Ohaus Halogen Moisture Analyzer. The instrument operates on thermogravimetric principle by measuring the weight of the sample while heating it at 140°C until equilibrium weight is obtained. Solids content may be calculated by dividing the sample weight prior drying by the equilibrium sample weight after drying and expressed in percent of weight. Solids content of component B in component (a2) when component B is a water-soluble salt may be at least 0.1 %, at least 1%, a least 5%, or at least 10% by weight.

Monomer (a3) may be present in the ratio of monomer (a3) to component A in the range of from 0.1 to 60 weight-%, 1 to 50 weight-%, 2 to 40 weight-% or 5 to 20 weight-%.

Polymerization initiators (a4) which can be used comprise all compounds which disintegrate into free radicals under the polymerization conditions, e.g. peroxides, hydroperoxides, persulfates, azo compounds and the so-called redox initiators. Suitable thermally activatable free-radical initiators or the oxidative component of the redox initiator pair are in particular those of the peroxy and azo type. These include hydrogen peroxide, peracetic acid, t-butyl hydroperoxide, di-t-butyl peroxide, dibenzoyl peroxide, benzoyl hydroperoxide, 2,4-dichlorobenzoyl peroxide, 2,5-dime-thyl-2,5-bis(hydroperoxy)hexane, perbenzoic acid, t-butyl peroxypivalate, t-butyl peracetate, dilauroyl peroxide, dicapryloyl peroxide, distearoyl peroxide, dibenzoyl peroxide, diisopropyl peroxydicarbonate, didecyl peroxydicarbonate, dieicosyl peroxydicarbonate, di-t-butyl perbenzoate, azobisisobutyronitrile, 2,2'-azobis-2,4-dimethylvaleronitrile, 2,2'-azobis-(2-amidinopropane) dihydrochloride, 2,2'-azobis(N, Ndimethylisobutyramidine dihydrochloride, 2-(carbamoylazo)isobutyronitrile, 4,4'-azobis(4-cyanovaleric acid), and 2,2'-azobis[2-(2-imidazolin-2-yl)propane] dihydrochloride, ammonium persulfate, potassium persulfate, sodium persulfate and sodium perphosphate. In some cases, it is advantageous to use mixtures of different polymerization initiators, e.g. mixtures of hydrogen peroxide and sodium or potassium peroxodisulfate. Mixtures of hydrogen peroxide and sodium peroxodisulfate can be used in any desired ratio.

Redox initiators mean initiator systems which comprise an oxidizing agent, for example a salt of peroxodisulfuric acid, hydrogen peroxide or an organic peroxide such as tert-butyl hydroperoxide, and a reducing agent. Examples for reducing agents are sulfur compound such as sodium hydrogensulfite, sodium hydroxymethanesulfinate and the hydrogensulfite adduct to acetone, nitrogen and phosphorus compounds such as phosphorous acid, hypophosphites and phosphinates, ditert-butyl hyponitrite and dicumyl hyponitrite, and also hydrazine and hydrazine hydrate and ascorbic acid. Redox initiator systems may comprise an addition of small amounts of redox metal salts such as iron salts, vanadium salts, copper salts, chromium salts or manganese salts, for example the ascorbic acid/iron(II) sulfate/sodium peroxodisulfate redox initiator system.

Preferred initiators or mixtures of initiators may be selected from the group consisting of peroxides, hydroperoxides, persulfates, azo compounds, and redox initiators. Examples comprise hydrogen peroxide, the redox initiator ascorbic acid/iron(II) sulfate with hydrogen peroxide, and 2,2'-azobis[2-(2-imidazolin-2-yl)propane] dihydrochloride. The specified polymerization initiators are used in customary amounts, e.g. in amounts of from 0.01 to 5, preferably 0.1 to 2.5 mol-%, based on the monomers to be polymerized.

During the polymerization of monomer (a3), both phases formed out of components (a1) and (a2) in the aqueous biphasic system are monophasic.

The polymerization of the biphasic water-in-water system may be performed typically at 20 to 100°C, preferably at 40 to 90°C. Typically, the polymerization may be undertaken at standard pressure, but can also be effected at elevated or reduced pressure, for example in the range from 0.5 to 20 bar. The rate of polymerization can be controlled in a known manner through the selection of the temperature and of the amount of polymerization initiator. On attainment of the polymerization temperature, the polymerization is appropriately continued for a further period, for example 2 to 6 hours, in order to complete the conversion of the monomers.

Particular preference is given to a mode of operation in which, during the polymerization, the temperature of the polymerizing reaction mixture is varied continuously or periodically, for example increased continuously or periodically. This may be done, for example, with the aid of a program with rising temperature.

For this purpose, the total polymerization time can be divided into two or more periods. The first polymerization period is characterized by a slow decomposition of the polymerization initiator. In the second polymerization period and any further polymerization periods, the temperature of the reaction mixture is increased, in order to accelerate the decomposition of the polymerization initiators. The temperature can be increased in one step or in two or more steps, or continuously in a linear or nonlinear manner. The temperature difference between the start and the end of the polymerization may be up to 60°C. In general, this difference is 3 to 40°C, preferably 3 to 30°C.

The microcapsule dispersions obtained by one of the procedures outlined above can subsequently be spray dried in a customary manner. To facilitate the redispersion of the spray dried microcapsules, additional amounts of emulsifier and/or protective colloid can optionally be added to the dispersions before the spray drying. Suitable emulsifiers and protective colloids are those specified above in connection with the production of the microcapsule dispersions. In general, the aqueous microcapsule dispersion is atomized in a hot air stream which is conducted in co-current or counter-current, preferably in co-current, with the spray mist. The inlet temperature of the hot air stream is typically in the range from 100 to 200°C, preferably 120 to 160°C, and the outlet temperature of the air stream is generally in the range from 30 to 90°C, preferably 60 to 80°C. The aqueous microcapsule dispersion can be sprayed, for example, by means of one-substance or multisubstance nozzles, or by means of a rotating disk. The spray dried microcapsules are normally deposited using cyclones or filter separators.

Optionally, at least one process additive may be added to aqueous biphasic system. The process additive is preferably a protective colloid, more preferably selected from the group consisting of inulin, alkyl polyglycosides, and carboxyalkyl celluloses. Most preferred process additives are carboxymethylcellulose, C8-10 alkyl glucosides, and inulin lauryl carbamate. At least one process additive may be added during any or all of the steps (a), (b) and/or (c).

Optionally, at least one enzyme may be added to component (a1).

The following examples illustrate the present invention without limiting it in scope to any embodiment or specification described therein.

### Examples:

The following abbreviations are used for the description of the examples:
PEG/VAC - polyethylene glycol and vinyl acetate graft copolymer
MMA- methyl methacrylate
EHA-ethylhexyl acrylate
DMAA- N,N-dimethylacrylamide
MAA - methacrylic acid
Laromer® TMPTA - Trimethylolpropane triacrylate
Plantacare® 818 UP - coco-glucoside
Glucopon® 650 EC - alkyl polyglucoside based on fatty alcohol C16 - C18
Trilon C - pentasodium salt of diethylenetriamine-pentaacetic acid (DTPA-Na5)
Savinase Ultra 16L - liquid protease enzyme with 4-formylphenylboronic acid
Amylase aq.- Effectenz S100 (from Dupont)
Xylanase aq. - liquid endoxylanase enzyme from Talaromyces mersonii

### Procedure for Examples 1-5:

A premix (I) was prepared from component (a1) and process additives. Premix (I), component (a2) and monomer(s) (a3) were combined and emulsified with the help of a high shear mixer at 20000 rpm for 1 minute at room temperature. The reaction mixture was then transferred to a reactor equipped with an anchor stirrer and it was agitated at a speed of 250 rpm. After 5 minutes of stirring, Trilon C, 50% of the total ascorbic acid amount, iron (II) sulfate heptahydrate and 50% of the total hydrogen peroxide amount were added successively to the reaction mixture within 1 minute. Temperature of the reaction mixture was increased from room temperature to 30 °C (during 10 minutes). The temperature was kept at 30 °C for 4 hours. Afterwards the second half of the ascorbic acid amount and hydrogen peroxide was added successively. The reaction mixture was stirred at 30 °C for additional 6 hours. The stirring speed was then decreased to 100 rpm and the capsules dispersion was cooled down to room temperature.

**Table 1. Examples 1 to 5.**

| **Example** | **Component (a1)** (disperse phase) | | **Component (a2)** (continuous phase) | | **Monomer(s)** (**a3**) | | **Initiator(s) (a4)** | | **Process additives** | |
|---|---|---|---|---|---|---|---|---|---|---|
| **1** | PEG/VAC | 45.0g | 40 % aq. ammonium sulfate | 100.5g | DMAA | 2.0g | Trilon C | 0.01g | Plantacare ® 818UP | 7.2g |
| | | | | | MAA | 2.0g | Ascorbic acid | 0.08g | | |
| | | | | | Laromer® TMPTA | 1.0g | Iron(II)sulfate heptahydrate | 3.0g | | |
| | | | | | | | Hydrogen peroxide | 0.04g | | |
| 2 | PEG/VAC | 4.1g | 40 % aq. ammonium sulfate | 100.5g | MMA | 1.8g | Trilon C | 0.01g | Plantacare ® 818UP | 7.2g |
| | Savinase Ultra 16 L | 36.5g | | | EHA | 1.8g | Ascorbic acid | 0.04g | | |
| | | | | | Laromer® TMPTA | 0.9g | Iron(II)sulfate heptahydrate | 3.0g | | |
| | | | | | | | Hydrogen peroxide | 0.04g | | |
| 3 | PEG/VAC | 4.1g | 40 % aq. ammonium sulfate | 100.5g | DMAA | 1.8g | Trilon C | 0.01g | Plantacare ® 818UP | 7.2g |
| | Savinase Ultra 16 L | 36.5g | | | MAA | 1.8g | Ascorbic acid | 0.08g | | |
| | | | | | Laromer® TMPTA | 0.9g | Iron(II)sulfate heptahydrate | 2.7g | | |
| | | | | | | | Hydrogen peroxide | 0.04g | | |
| 4 | PEG/VAC | 22.5g | 40 % aq. ammonium sulfate | 100.5g | MMA | 2.0g | Trilon C | 0.01g | -------- | -------- |
| | Xylanase aq. | 22.5g | | | EHA | 2.0g | Ascorbic acid | 0.07g | | |
| | | | | | Laromer® TMPTA | 1.0g | Iron(II)sulfate heptahydrate | 2.0g | | |
| | | | | | | | Hydrogen peroxide | 0.03g | | |
| 5 | PEG/VAC | 20.5g | 40 % aq. ammonium sulfate | 100.5g | MMA | 1.8g | Trilon C | 0.01g | Glucopon® 650 EC | 7.2g |
| | | | | | EHA | 1.8g | Ascorbic acid | 0.04g | | |
| | Amylase aq. | 20.3g | | | Laromer® TMPTA | 0.9g | Iron(II)sulfate heptahydrate | 1.7g | | |
| | | | | | | | Hydrogen peroxide | 0.02g | | |

For Examples 1 to 5, stable dispersions of microcapsules were formed.

**Table 2. Average particle sizes and water content of the Examples 1 to 7.**

| **Example** | **Average particle size light microscope [µm]** | **Average particle size FBRM probe [µm]** | **Water content of dried microcapsules [weight %]** |
|---|---|---|---|
| 1 | 8.1 | | 3.9 |
| 2 | | 5.3 | 7.5 |
| 3 | 3.6 | 10.0 | 8.4 |

The turbidity in aqueous solutions of single components which were used in the examples above are summarized in Table 3.

**Table 3. Turbiditv measured in FNUs**

| **Solution measured** | **FNU** |
|---|---|
| Sodium sulfate, 40 wt.-% aqueous solution | 0.6 |
| Pluronic PE6200, 40 wt.-% aqueous solution | 2.4 |
| Savinase Ultra 16L, 40 wt.-% aqueous solution | 1.2 |
| PEG/VAC, 40 wt.-% aqueous solution | 2.7 |

## Claims

1. Microcapsule comprising
(a) at least one polyether vinyl ester graft polymer,
(b) at least one acrylic polymer, and
(c) water in the range of from 0.1 % of weight to 100 % of weight of the total polymer.

2. Microcapsule according to claim 1, wherein the acrylic polymer comprises at least one monomer selected from the group consisting of C₁ to C₂₄-alkyl esters of acrylic acid, C₁ to C₂₄-glycidyl esters of acrylic acid, C₁ to C₂₄-alkyl esters of methacrylic acid, C₁ to C₂₄-glycidyl esters of methacrylic acid, acrylic acid esters with hydroxylic groups, acrylic acid esters with carboxylic groups, methacrylic acid esters with hydroxylic groups, methacrylic acid esters with carboxylic groups, and acrylates having two or more acrylic groups in the molecule.

3. Microcapsule according to any of claims 1 to 2, wherein the core of the microcapsule comprises at least one polyether vinyl ester graft polymer and he shell is at least partially comprise of at least one acrylic polymer.

4. Microcapsule according to any of claims 1 to 3, wherein the microcapsule comprises at least one enzyme.

5. Aqueous dispersion of microcapsules according to claim 4, wherein the microcapsules comprise an enzyme selected from the group consisting of oxireductases, transferases, hydrolases, lyases, isomerases and ligases.

6. Aqueous dispersion according to claim 5 wherein the shell of the microcapsule is an acrylic polymer that is insoluble in water in pH range of from 1 to 12 in time interval of 1 hour.

7. Process for the preparation of microcapsules comprising the steps
(a) preparation of an aqueous biphasic system by mixing
(i) component (a1) comprising a component A consisting of at least one polyether vinyl ester graft polymer;
wherein component (a1) is a monophasic system at 23°C, and forms a monophasic system at 23°C if mixed with water in the range of from 1:99 to 99:1 by weight, and
(ii) component (a2) containing water and a water-soluble salt B, wherein (a2) is a monophasic system at 23°C, and
(iii) at least one monomer (a3), and
(iv) optionally at least one initiator (a4),
wherein (a1), (a2), (a3), and (a4) can be mixed together in any order or simultaneously, followed by
(b) optionally shearing of the biphasic system to form an emulsion, and
(c) polymerization of monomer (a3).

8. Process according to 7 wherein the solids content of polyether vinyl ester graft polymer in component (a1) is in the range of from 0.1 to 70 % by weight.

9. Process according to any of claims 7 or 8 wherein the water soluble salt is a water-soluble salt selected from the formula K^{(a+)}_{b}N^{(b-)}ₐ, with the cation K selected from ammonium, potassium, sodium, magnesium, and calcium, and the anion N selected from sulfate, fluoride, chloride, bromide, iodide, phosphate, acetate, nitrate, and methanesulfonate, with a and b representing the absolute value of the charge of each ion as a natural number and the stoichiometric number for each ion in the salt.

10. Process according to any of claims 7 to 9 wherein component (a2) comprises at least 5 % by weight of a water-soluble salt.

11. Process according to any of claims 7 to 10 wherein a process additive selected from the group consisting of polysaccharides, such as inulin, alkyl polyglycosides, and carboxyalkylcellulose is added in any of the steps (a), (b), and/or (c).

12. Process according to any of claims 7 to 11 wherein component (a1) contains at least one enzyme.

13. Process according to claim 12 wherein the enzyme is selected from the group consisting of oxidoreductases, transferases, hydrolases, lyases, isomerases and ligases.

14. Process according to any of claims 7 to 13 wherein the monomer (a3) is selected from the group consisting of C₁ to C₂₄-alkyl esters of acrylic acid, C₁ to C₂₄-glycidyl esters of acrylic acid, C₁ to C₂₄-alkyl esters of methacrylic acid, C₁ to C₂₄-glycidyl esters of methacrylic acid, acrylic acid esters with hydroxylic groups, acrylic acid esters with carboxylic groups, methacrylic acid esters with hydroxylic groups, methacrylic acid esters with carboxylic groups, and acrylates having two or more acrylic groups in the molecule.

15. Process according to any of claims 7 to 14 wherein the ratio of monomer (a3) to polyether vinyl ester graft polymer is in the range of from 0.1 to 60 weight-%.
